# FASCICULE DE BREVET EUROPEEN

(11) **EP 3 455 812 B1**
(45) Date de publication et mention de la délivrance du brevet: **01.04.2020**
(21) Numéro de dépôt: 17727633.4
(22) Date de dépôt: 05.05.2017
(51) Int. Cl.: G06Q 20/32, G06Q 20/38, G06Q 20/40, G07F 7/12, G06Q 20/34, G07F 7/08

(54) **PROCÉDÉ DE SÉCURISATION D'UN DISPOSITIF ELECTRONIQUE, ET DISPOSITIF ELECTRONIQUE CORRESPONDANT**
VERFAHREN ZUR SICHERUNG EINER ELEKTRONISCHEN VORRICHTUNG UND ZUGEHÖRIGE ELEKTRONISCHE VORRICHTUNG
METHOD FOR SECURING AN ELECTRONIC DEVICE, AND CORRESPONDING ELECTRONIC DEVICE

(30) Priorité: 09.05.2016 FR 1654122
(43) Date de publication de la demande: 20.03.2019
(73) Titulaire: IDEMIA France, 92400 Courbevoie (FR)
(72) Inventeur: CHAMBEROT, Francis, 92700 Colombes (FR); DE OLIVEIRA, Marco, 92700 Colombes (FR)
(74) Mandataire: Cabinet Beau de Loménie
(86) Numéro de dépôt international: PCT/FR2017/051089
(87) Numéro de publication internationale: WO 2017/194862

(56) Documents cités:
- EP-A1- 2 407 920
- WO-A1-2010/070539
- WO-A2-02/39222
- US-A1- 2009 259 588
- US-A1- 2011 185 435
- US-A1- 2013 119 130
- US-A1- 2014 324 698

## Description

### Arrière-plan de l'invention

La présente invention se situe dans le domaine général des dispositifs électroniques et concerne plus particulièrement un dispositif électronique, tel qu'une carte à puce par exemple, apte à coopérer avec un terminal externe pour réaliser une transaction, dans le domaine bancaire par exemple.

L'invention s'applique plus particulièrement, mais de manière non exclusive, aux cartes à puce (ou cartes à microcircuit), conformes par exemple à la norme ISO7816. L'invention vise notamment la sécurisation d'une carte à puce fonctionnant selon le protocole EMV (pour « *Europay Mastercard Visa* »).

De manière générale, une carte à puce est conçue pour communiquer avec un dispositif externe à cette carte, autrement appelé terminal ou lecteur. Ces cartes permettent d'effectuer divers types de transactions, telles que par exemple des transactions de paiement, de prélèvement ou encore d'authentification du porteur. Les cartes à puce pour applications bancaires (carte de crédit, carte de débit etc.), par exemple, sont aptes à coopérer avec des terminaux de paiement ou des distributeurs automatiques de billets (DAB) pour réaliser divers opérations financières.

EMV est le protocole standardisé utilisé aujourd'hui majoritairement dans le monde pour sécuriser notamment les transactions de paiement effectuées par des cartes à puce.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Suivant le type de carte utilisé, la situation, ou encore le montant considéré, une carte EMV peut fonctionner en ligne ou hors ligne. En mode en ligne, la carte EMV peut communiquer, via le lecteur, avec l'entité émettrice correspondante (la banque à l'origine de la carte, par exemple) afin de vérifier en particulier que la transaction en cours est légitime. En revanche, si la carte EMV fonctionne en mode hors ligne, celle-ci applique des critères de vérification préenregistrés pour décider si la transaction doit être autorisée ou refusée.

De nombreux mécanismes de sécurité ont récemment été développés afin de sécuriser autant que possible l'usage croissant des cartes à puce, de type EMV notamment.

Cependant, les cartes à puce font aujourd'hui face à un type d'attaque malveillante pour lequel aucune protection satisfaisante n'a été à ce jour développée. Cette attaque consiste à envoyer, depuis l'entité émettrice de la carte à puce, une commande, dite « commande de script », destinée à modifier un ou plusieurs paramètres de fonctionnement de la carte. La modification porte généralement sur des paramètres de fonctionnement sensibles de la carte tels que des niveaux de compteurs internes ou des seuils limites à respecter (limites de paiement hors ligne etc.). La commande peut encore porter sur une mise à jour de la configuration de la carte à puce causant un changement sensible dans le traitement des transactions par la carte à puce.

Dans le cadre d'une telle attaque, les commandes de script envoyées sont authentiques dans le sens où elles présentent toutes les caractéristiques d'une commande de script valide générée et envoyée par l'émetteur de la carte pour modifier l'un ou plusieurs de ses paramètres de fonctionnement. Ces commandes de script sont cependant frauduleuses dans l'intention dans le sens où ces commandes sont envoyées sans l'autorisation préalable de l'émetteur (de la banque par exemple).

Dans la mesure où ces commandes de script présentent en tout point les caractéristiques d'une commande valide (cryptogramme MAC authentique etc.), elles sont normalement exécutées par les cartes à puce.

De telles commandes de script frauduleuses peuvent notamment être envoyées avec la complicité d'une personne malveillante ayant accès à l'interface de communication de l'émetteur. Il peut s'agir par exemple d'un employé mal intentionné de la banque émettrice de la carte à puce ou encore d'un tiers ou d'un programme ayant accès aux infrastructures permettant l'envoi de telles commandes. C'est pourquoi, ce type d'attaque est parfois désignée sous la dénomination anglo-saxonne « *insider attack* » (ou « attaque de l'intérieur ») car l'envoi de ces commandes frauduleuses émanera généralement de l'entité émettrice de la carte à puce concernée.

Les risques en termes de sécurité sont donc particulièrement élevés en raison du caractère sensible des paramètres de fonctionnement susceptibles d'être modifiés frauduleusement dans une carte à puce lors d'une telle attaque. Ce risque est encore accru par le fait qu'un grand nombre de commandes de script frauduleuses peut être envoyé massivement à de multiples cartes à puce.

Il existe donc aujourd'hui un besoin pour sécuriser les cartes à puce (de type EMV notamment) et, plus généralement, les dispositifs électroniques aptes à coopérer avec un terminal externe pour mettre en œuvre une transaction. En particulier, aucune solution satisfaisante n'existe aujourd'hui pour pallier aux risques de sécurité liés à une attaque de type « *insider attack* » telle qu'expliquée ci-avant.

Le document US 2014/324698 A1 daté du 30 octobre 2014 divulgue un procédé pour réaliser une transaction financière sécurisée sur dispositif utilisé en tant que terminal de paiement, le dispositif comportant une unité centrale de traitement (CPU) et un élément sécurisé.

Le document US 2013/119130 A1 daté du 16 mai 2013 divulgue un lecture sécurisé de cartes à puce, capable de réaliser des signatures de lecteur sur des données représentatives d'événements et d'actions qui peuvent avoir un caractère sécuritaire, ces données pouvant inclure des données représentatives de commandes reçues d'un terminal hôte, des commandes échangées avec une carte à puce, etc.

Le document WO 2010/070539 A1 daté du 24 juin 2010 divulgue un procédé de sécurisation d'une carte à puce. Un dispositif peut notamment communiquer en NFC pour transmettre du contenu à une carte à puce afin de la rendre opérationnelle.

### Objet et résumé de l'invention / Résumé

A cet effet, la présente invention concerne un procédé de sécurisation mis en œuvre par un dispositif électronique, ledit procédé comprenant :
- réception d'une première commande requérant une modification d'au moins un paramètre de fonctionnement du dispositif électronique ;
- détection de si ledit au moins un paramètre de fonctionnement est un paramètre prédéfini en tant que paramètre sensible dans le dispositif électronique ;
- dans l'affirmative, détermination de si ladite modification requise par la première commande entraîne, si elle est appliquée, une dégradation de la sécurité du dispositif électronique en comparant l'état initial dudit au moins un paramètre à réception de ladite première commande avec un nouvel état à affecter audit au moins un paramètre de fonctionnement en réponse à la première commande ; et
- en cas de dégradation de la sécurité dudit dispositif électronique, déclenchement d'au moins une opération de sécurisation du dispositif électronique en réponse à ladite première commande.

L'invention permet avantageusement de réaliser une sécurisation appropriée du dispositif électronique lorsque ce dernier détecte qu'une modification de l'un de ses paramètres de fonctionnement sensibles est requise par une commande de script. Il est ainsi possible d'adapter le traitement, par le dispositif électronique, des commandes de script visant à modifier un paramètre de fonctionnement, de façon à limiter les risques encourus par ledit dispositif en termes de sécurité.

L'invention permet notamment de protéger efficacement le dispositif électronique face à une potentielle attaque de type « *insider attack* » telle que décrite précédemment, dans le cas où une commande de script frauduleuse est reçue par le dispositif en question. Le dispositif électronique peut adapter sa réponse sécuritaire à une commande de script reçue en réalisant une opération de sécurisation spécifique et ce, même si la vérification de l'authenticité et de l'intégrité de ladite commande de script est passée avec succès par le dispositif électronique.

Selon un mode de réalisation particulier, le dispositif électronique est une carte à puce, par exemple conforme à la norme ISO 7816.

Selon un mode de réalisation particulier, le dispositif électronique détecte que ledit paramètre de fonctionnement est un paramètre prédéfini en tant que paramètre sensible si la première commande comprend l'un parmi une liste d'au moins un identifiant prédéfini.

Selon un mode de réalisation particulier, si ledit au moins un paramètre est détecté comme étant un paramètre prédéfini en tant que paramètre sensible, la détermination, à partir dudit au moins un paramètre de fonctionnement, d'une vérification à réaliser,
le dispositif électronique réalisant ladite vérification lors de ladite détermination pour déterminer si ladite modification requise entraîne, si elle est appliquée, une dégradation de la sécurité du dispositif.

Selon un mode de réalisation particulier, le dispositif électronique vérifie si ledit nouvel état est supérieur ou inférieur à l'état initial dudit au moins un paramètre,
et détermine, à partir de ladite vérification, si ladite modification requise entraîne, si elle est appliquée, une dégradation de la sécurité du dispositif électronique.

Selon un mode de réalisation particulier, le dispositif électronique détermine que ladite modification requise par la première commande entraîne, si elle est appliquée, une dégradation de la sécurité du dispositif électronique, si l'écart de valeur entre le nouvel état et l'état initial dudit au moins un paramètre atteint une valeur seuil prédéfinie.

Selon un mode de réalisation particulier, ladite au moins une opération de sécurisation comprend au moins l'un quelconque parmi :
- enregistrement d'un message à envoyer, ledit message informant de la réception de ladite première commande ;
- envoi dudit message ;
- enregistrement de l'état initial dudit au moins un paramètre de fonctionnement ;
- application de ladite modification audit au moins un paramètre de fonctionnement de sorte à passer son état de l'état initial au nouvel état ; et
- enregistrement, dans un fichier d'historisation, d'une donnée représentative de la réception de ladite première commande.

Selon un mode de réalisation particulier, suite audit enregistrement de l'état initial et à l'application de la modification causant le passage dudit au moins un paramètre de fonctionnement de l'état initial au nouvel état, le dispositif électronique restaure l'état initial ou un état prédéfini dudit au moins un paramètre de fonctionnement en réponse à une commande de restauration. Dans un exemple particulier, l'état prédéfini est un état par défaut différent du nouvel état.

Selon un mode de réalisation particulier, le dispositif électronique reçoit ladite première commande lors d'une première transaction mise en œuvre par le dispositif électronique, et dans lequel le dispositif électronique reçoit la commande de restauration lors d'une seconde transaction mise en oeuvre par le dispositif électronique, ladite seconde transaction étant subséquente à la première transaction.

Selon un mode de réalisation particulier, la première commande comprend un cryptogramme de type MAC.

Selon un mode de réalisation particulier, la première commande est une commande PUT DATA selon la norme ISO 7816, ladite première commande commandant l'affectation du nouvel état audit au moins un paramètre de fonctionnement.

Selon un mode de réalisation particulier, le dispositif électronique est une carte à puce apte à mettre en œuvre une transaction en coopération avec un terminal de lecture.

Selon un mode de réalisation particulier, le dispositif électronique est une carte EMV, l'une au moins parmi les première commande et deuxième commande étant une commande de script reçue, lors d'une transaction EMV, après l'envoi, par ladite carte EMV, d'un message ARQC conforme à la norme EMV.

Selon un mode de réalisation particulier, la première commande inclut le nouvel état à affecter audit au moins un paramètre de fonctionnement.

Dans un mode particulier de réalisation, les différentes étapes du procédé de sécurisation sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif électronique (tel qu'une carte à puce) ou plus généralement dans un ordinateur, ce programme comportant des instructions adaptées à la mise en œuvre des étapes d'un procédé de sécurisation tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un dispositif électronique comprenant :
- un module de réception d'une première commande requérant une modification d'au moins un paramètre de fonctionnement du dispositif électronique ;
- un module de détection pour détecter si ledit au moins un paramètre de fonctionnement est un paramètre prédéfini en tant que paramètre sensible dans le dispositif électronique ;
- un module de détermination configuré, en cas de résultat positif de ladite détection par le module de détection, pour déterminer si ladite modification requise par la première commande entraîne, si elle est appliquée, une dégradation de la sécurité du dispositif électronique en comparant l'état initial dudit au moins un paramètre à réception de ladite première commande avec un nouvel état à affecter audit au moins un paramètre de fonctionnement en réponse à la première commande ; et
- un module de sécurisation configuré, en cas de résultat positif de ladite détermination par le module de détermination, pour déclencher au moins une opération de sécurisation prédéfinie du dispositif électronique en réponse à ladite première commande.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

On notera que les différents modes de réalisation mentionnés ci-avant en relation avec le procédé de sécurisation de l'invention ainsi que les avantages associés s'appliquent de façon analogue au dispositif électronique de l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 est un diagramme représentant schématiquement les étapes réalisées par une carte à puce, un terminal externe et l'émetteur de la carte à puce dans la mise en œuvre d'une transaction EMV ;
- la figure 2 représente schématiquement la structure d'une carte à puce conforme à un mode de réalisation particulier de l'invention ;
- la figure 3 représente schématiquement des modules mis en œuvre dans la carte à puce illustrée en figure 2, selon un mode de réalisation particulier ;
- la figure 4 représente schématiquement des règles prédéfinies enregistrées dans la carte à puce illustrée en figure 2, selon un mode de réalisation particulier ;
- la figure 5 représente schématiquement un fichier d'historisation enregistré dans la carte à puce illustrée en figure 2, selon un mode de réalisation particulier ;
- la figure 6 représente schématiquement, sous forme d'un organigramme, les étapes d'un procédé de sécurisation mise en œuvre selon un mode de réalisation particulier de l'invention ;
- la figure 7 représente schématiquement, sous forme d'un organigramme, les étapes d'un procédé de sécurisation mise en œuvre selon un mode de réalisation particulier de l'invention ; et
- la figure 8 représente schématiquement, sous forme d'un organigramme, les étapes d'un procédé de sécurisation mise en œuvre selon un mode de réalisation particulier de l'invention.

### Description détaillée de plusieurs modes de réalisation

Comme indiqué précédemment, la présente invention concerne les dispositifs électroniques, tels que les cartes à puce par exemple, aptes à coopérer avec un terminal externe pour réaliser une transaction, dans le domaine bancaire par exemple.

L'invention propose de sécuriser les carte à puce contre les attaques de type « *insider attack* », et plus particulièrement contre les commandes de script frauduleuses telles que décrites précédemment.

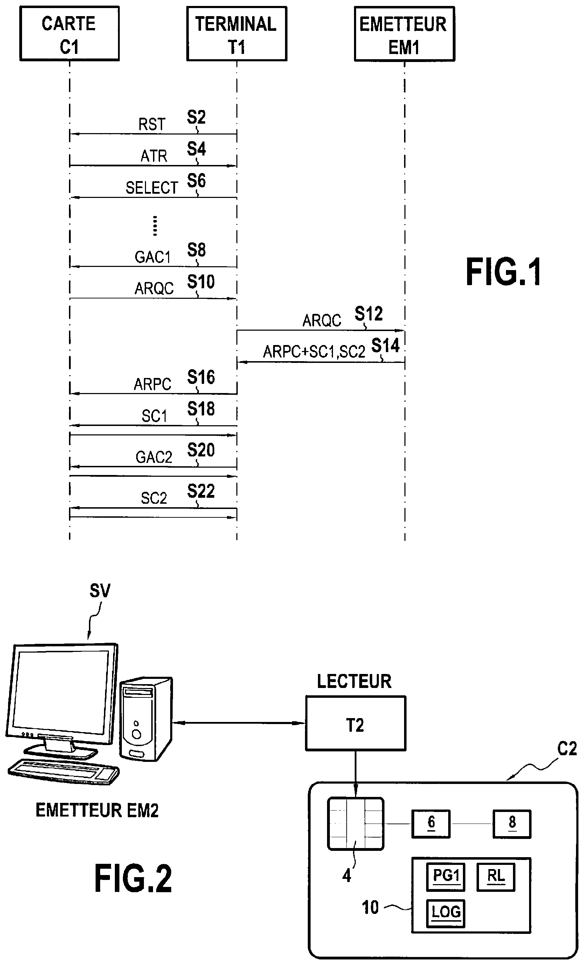

La **figure 1** représente un exemple d'une transaction de paiement conforme au protocole EMV, à l'aide d'une carte à puce C1. Dans cet exemple, la carte C1 est une carte EMV.

Lors de la mise en œuvre d'une transaction, le protocole EMV s'articule en trois phases, des variantes étant toutefois possibles. On comprendra que certains éléments et opérations généralement mis en œuvre lors d'une transaction EMV ont été volontairement omis car ils ne sont pas nécessaires à la compréhension de la présente invention.

Lors d'une première phase destinée à authentifier la carte à puce C1 utilisée, le terminal T1 et la carte C1 s'échangent un message RESET (RST) en S2 puis une réponse ATR en S4.

En S6, le porteur de la carte sélectionne via le terminal T1 le mode de transaction souhaité, déclenchant ainsi l'envoi d'une commande « *SELECT »* à la carte C1 afin d'initier le début de la transaction EMV.

Une fois la phase d'authentification de carte achevée, le protocole EMV procède à une phase d'authentification (non représentée) du porteur de la carte C1. Le terminal T2 détermine le procédé d'authentification du porteur à appliquer et détermine en particulier si la transaction est effectuée en mode avec vérification de code ou en mode sans vérification de code. Si le mode avec vérification de code est sélectionné, la carte à puce C1 vérifie la validité du code PIN entré par le porteur sur le terminal T1. Si en revanche le mode sans vérification de code est sélectionné, aucune vérification de code PIN n'est réalisée. Ce cas se produit par exemple lorsque le terminal est dans l'incapacité de prendre en charge la vérification d'un code PIN. Dans ce cas, la signature manuscrite du porteur peut éventuellement être requise pour authentifier ce dernier.

Une fois la phase d'authentification du porteur achevée, le protocole EMV initie la phase de vérification de la transaction. Pour ce faire, le terminal T1 envoie (S8) à la carte à puce C1 une première commande APDU dite GENERATE AC ou GAC (notée ici GAC1). Cette commande bien connue comprend des informations sur la transaction en cours telles que le montant de la transaction, la devise utilisée, le type de transaction, etc.

La carte EMV réalise alors une vérification de la transaction selon des critères de vérification prédéfinis puis envoie (S10), en réponse, un cryptogramme (ou certificat cryptographique) comprenant un code d'authentification de message (ou MAC pour *« Message Authentification Code* » en anglais). Ce code d'authentification MAC est par exemple crypté à partir d'une clé cryptographique mémorisée dans la carte C1. La réponse de la carte C1 dans le message ARQC dépend notamment du paramétrage de la carte effectué par l'entité émettrice (dit « émetteur ») de ladite carte.

Plus précisément, dans l'exemple de la **figure 1****,** la carte à puce C1 envoie en S10 un message de type ARCQ (« *Autorisation Request Cryptogram* ») indiquant que la carte souhaite poursuivre la transaction en ligne avec, par exemple, un serveur distant de l'émetteur EM1 de la carte C1 utilisée (mode en ligne). Le terminal T1 transmet (S12) alors le cryptogramme ARQC à l'émetteur EM1 qui réalise à distance un certain nombre de vérifications afin de s'assurer que la transaction est valide. Le terminal T1 reçoit (S14) ensuite, en réponse, un message crypté de type ARPC indiquant la décision de l'émetteur EM1. En S14, le terminal T1 peut en outre recevoir de l'émetteur EM1 une ou des commandes, dites « commandes de script », chacune requérant la modification dans la carte à puce C1 d'au moins un paramètre de fonctionnement. Dans cet exemple, deux commandes de script SC1 et SC2 sont envoyées en S14 par l'émetteur EM1.

Le terminal T1 transmet alors le message ARPC (S16) et chacune des commandes de script SC1 et SC2 (S18, S22) à la carte C1.

Plus particulièrement, dans l'exemple représenté en **figure 1****,** le terminal T1 envoie en S18 la commande de script SC1 à la carte C1. En réponse à cette commande SC1, la carte à puce C1 modifie au moins un paramètre de fonctionnement de façon appropriée. Le terminal T1 envoie ensuite en S20 à la carte à puce C1 une deuxième commande APDU bien connue de type GENERATE AC ou GAC (notée ici GAC2). Si la carte C2 accepte la transaction, celle-ci envoie, en réponse à la commande GAC2, un cryptogramme de type TC (transaction acceptée) au terminal T1. Dans le cas contraire, la carte C1 envoie un cryptogramme de type AAC au terminal T1 (refus de la transaction). En outre, toujours dans cet exemple, le terminal T1 envoie ensuite en S22 la commande de script SC2 à la carte C1. En réponse à cette commande SC2, la carte C1 modifie au moins un paramètre de fonctionnement de façon appropriée.

Chaque commande de script SC1, SC2 provenant de l'émetteur EM1 peut être reçue en cours de transaction, avant ou après la réception de la commande GAC2, et peut donner lieu à un échange de données entre la carte C1 et le terminal T1. Le nombre et la nature des commandes de script reçues ainsi que la manière dont celles-ci sont traitées par la carte C1 peut varier selon le cas.

Comme indiqué ci-avant, dans le cadre d'une attaque de type « *insider attack »,* des commandes de script SC1, SC2 peuvent être envoyées par une personne ou entité malveillante, par exemple depuis l'interface de communication de l'émetteur EM1 (depuis l'un de ses serveurs par exemple).

La présente invention propose un procédé de sécurisation mis en œuvre par un dispositif électronique pour palier notamment à ce type d'attaque malveillante.

Selon différents modes de réalisation, le procédé de l'invention, mis en œuvre par un dispositif électronique tel qu'une carte à puce par exemple, comprend : la réception d'une commande requérant une modification d'un (ou d'une pluralité de) paramètre de fonctionnement du dispositif électronique, cette commande incluant un nouvel état à affecter audit paramètre de fonctionnement ; la détection de si le paramètre de fonctionnement est un paramètre prédéfini en tant que paramètre sensible dans le dispositif électronique ; dans l'affirmative, la détermination de si la modification requise entraîne, si elle est appliquée, une dégradation de la sécurité du dispositif électronique en comparant l'état initial du paramètre à réception de ladite commande avec le nouvel état à affecter audit paramètre ; et en cas de dégradation de la sécurité dudit dispositif électronique, le déclenchement d'une opération de sécurisation du dispositif électronique en réponse à ladite commande.

L'invention porte également sur un tel dispositif électronique apte à mettre en œuvre un procédé de sécurisation comme défini ci-dessus.

Dans le présent exposé, des exemples de mises en œuvre de l'invention sont décrits en relation avec une carte à puce de type EMV. On comprendra que l'invention ne se limite par exclusivement aux cartes EMV mais s'applique plus généralement à tout dispositif apte à mettre en œuvre une transaction, y compris des dispositifs autre que des cartes à puce et qui utilisent le standard EMV, et des dispositifs électroniques qui utilisent d'autres standards de transaction.

On peut également noter que la notion de transaction est ici entendue au sens large et comprend par exemple, dans le domaine bancaire, aussi bien une transaction de paiement ou de transfert que d'une consultation d'un compte bancaire sur un terminal bancaire. Les divers modes de réalisation de l'invention sont ici décrits dans le cadre d'une carte de paiement destinée à réaliser des transactions bancaires. On comprendra que d'autres types de transactions ou opérations sont envisageables dans le cadre de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

La **figure 2** représente, de manière schématique, la structure d'une carte à puce C2, conforme à un mode de réalisation particulier.

On comprendra que certains éléments généralement présents dans une carte à puce ont été volontairement omis car ils ne sont pas nécessaires à la compréhension de la présente invention. A noter également que la carte à puce C2 représentée en **figure 1** n'est qu'un exemple de réalisation, d'autres mises en œuvre étant possibles dans le cadre de l'invention. L'homme du métier comprendra en particulier que certains éléments de la carte à puce C2 ne sont décrits ici que pour faciliter la compréhension de l'invention, ces éléments n'étant pas nécessaires pour mettre en œuvre l'invention.

La carte à puce C2 est apte à coopérer avec un terminal (ou lecteur) T2 afin de réaliser une transaction, telle qu'une transaction financière ou bancaire (transaction de paiement ou autre) dans le cas présent.

Le terminal T2 est apte à faire l'interface entre la carte à puce C2 et un serveur distant SV. Dans le cas présent, le serveur SV est un serveur de l'entité émettrice EM2 (i.e., une institution bancaire par exemple) de la carte à puce C2. Dans cet exemple, la carte C2 est apte, via le terminal T2, à communiquer avec le serveur distant SV afin de mettre en oeuvre, selon le protocole EMV, une transaction dite « en ligne », c'est-à-dire impliquant un échange avec l'émetteur EM1.

Plus précisément, la carte à puce C2 comprend dans cet exemple des contacts externes aptes à coopérer avec le lecteur T2, au moins un processeur 6, une mémoire volatile réinscriptible (de type RAM) 8 et une mémoire non volatile réinscriptible 10 (de type Flash par exemple).

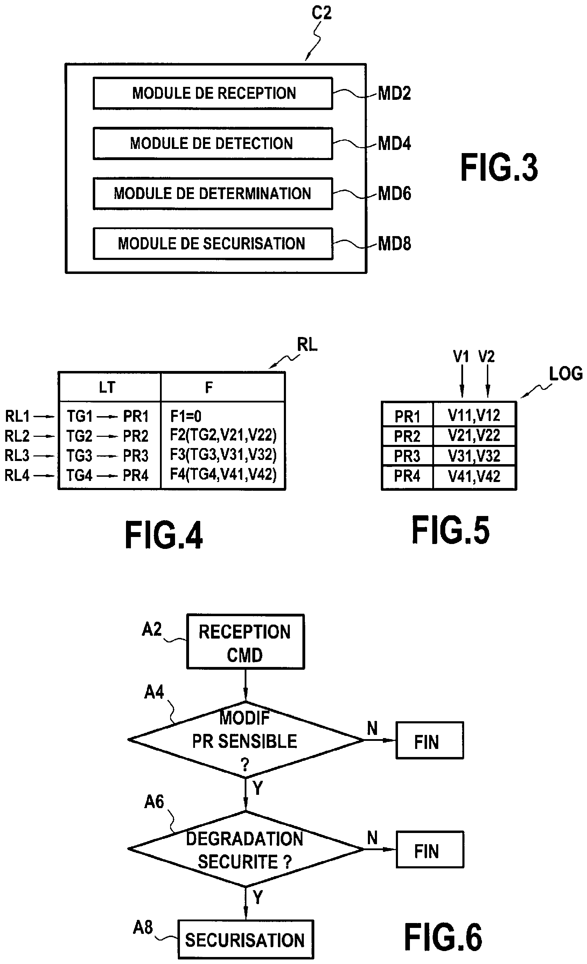

La mémoire 10 constitue dans un cet exemple un support d'enregistrement (ou support d'informations) conforme à un mode de réalisation particulier, lisible par le la carte à puce C2, et sur lequel est enregistré un programme d'ordinateur PG1 conforme à un mode de réalisation particulier. Ce programme d'ordinateur PG1 comporte des instructions pour l'exécution des étapes d'un procédé de sécurisation selon un mode de réalisation particulier. Les principales étapes de ce procédé sont représentées, dans des modes de réalisation particuliers de l'invention, sur les **figures 6****,** **7** et **8** décrites ultérieurement.

Dans un exemple particulier, la carte à puce C2 est conforme à la norme ISO 7816. Dans ce cas, les contacts externes 4 présentent des caractéristiques conformes à cette norme. On comprendra toutefois que d'autres modes de réalisation sont possibles. La carte à puce C2 peut par exemple coopérer avec le lecteur T2 en mode sans contact via une antenne RF intégrée dans la carte C2.

Toujours dans l'exemple considéré ici, un fichier d'historisation LOG (appelé aussi *« Log* » en anglais) et au moins une règle prédéfinie RL sont enregistrés dans la mémoire non volatile réinscriptible 10 de la carte C2. Dans l'exemple considéré ici, les règles RL comprennent quatre règles prédéfinies RL1, RL2, RL3 et RL4, d'autres exemples étant possibles dans le cadre de l'invention. Les règles prédéfinis RL et le fichier d'historisation LOG seront décrits plus en détail ci-après en référence aux **figures 4** et **5** respectivement.

Le processeur 6 piloté par le programme d'ordinateur PG1, met ici en œuvre un certain nombre de modules représentés en **figure 3****,** à savoir : un module de réception MD2, un module de détection MD4, un module de détermination MD6 et un module de sécurisation MD8.

Dans cet exemple, le module de réception MD2 est apte à recevoir une commande (ou « commande de script ») notée ici CMD, cette commande requérant une modification d'au moins un paramètre de fonctionnement PR de la carte à puce C2. Des exemples d'une telle commande de script CMD seront décrits ultérieurement.

Selon un exemple particulier, ladite commande CMD inclut un nouvel état V2 (ou une nouvelle valeur) à affecter audit au moins un paramètre de fonctionnement PR de la carte C2. Grâce à l'envoi d'une telle commande CMD, il est ainsi possible de commander à la carte à puce C2 la modification d'un paramètre de fonctionnement PR de sorte à faire passer son état d'un ancien état (ou « état initial ») V1 à un nouvel état V2 spécifié dans la commande.

Le module de détection MD4 est configuré pour détecter si ledit au moins un paramètre de fonctionnement PR, dont une modification est requise par la commande CMD reçue par le module de réception MD2, est un paramètre prédéfini en tant que paramètre sensible dans la carte à puce C2.

Selon un exemple particulier illustré en **figure 4****,** une liste LT d'au moins un paramètre sensible PR est enregistrée dans la mémoire 10. A partir d'une telle liste LT, il est possible de déterminer, pour chaque paramètre de fonctionnement PR de la carte à puce C2, s'il s'agit ou non d'un paramètres sensible (ou non sensible). La définition des paramètres de fonctionnement dits sensibles est par exemple réalisée lors de la personnalisation de la carte à puce C2. Comme expliqué par la suite, divers manières sont possibles pour définir, à partir d'une telle liste LT, le ou les paramètres de fonctionnement dit sensibles dans la carte à puce C2.

Selon un exemple particulier, la commande de script CMD reçue par le module de réception MD2 présente une structure TLV pour « *Tag Length Value* » en anglais. Dans le cas présent, le tag TG inclus dans la commande CMD définit la zone mémoire de destination où le paramètre de fonctionnement PR correspondant doit être modifié dans la mémoire 10 de la carte C2. Dans cet exemple, le module de détection MD4 est configuré pour déterminer si le tag TG de la commande CMD reçue est enregistré dans la liste LT comme identifiant un paramètre PR sensible de la carte C2.

Dans l'exemple illustré en **figure 4****,** la liste LT identifie quatre tags (ou identifiants) TG1, TG2, TG3 et TG4, chacun de ces tags correspondant à un paramètre de fonctionnement respectif PR1, PR2, PR3 et PR4.

On suppose par exemple que le paramètre de fonctionnement PR1 n'est pas un paramètre prédéfini en tant que paramètre sensible dans la carte C2 et que les paramètres de fonctionnement PR2, PR3 et PR4 sont chacun prédéfinis en tant que paramètre sensible dans la carte C2.

Dans le cas où ledit au moins un paramètre de fonctionnement PR, dont une modification est requise par la commande CMD reçue, est détecté comme étant un paramètre sensible dans la carte à puce C2, le module de détermination MD6 est configuré pour déterminer si ladite modification requise par la commande CMD cause, si elle est appliquée, une dégradation (ou baisse) de la sécurité de la carte à puce C2. Pour ce faire, le module de détermination MD6 compare l'état initial V1 dudit au moins un paramètre PR à réception de ladite commande CMD avec le nouvel état V2 à affecter audit au moins un paramètre PR en réponse à la commande CMD reçu (ce nouvel état étant par exemple inclus dans la commande la commande CMD).

Selon un exemple de réalisation particulier, si ledit au moins un paramètre PR est détecté en tant que paramètre sensible, le module de détermination MD6 est configuré pour déterminer, à partir dudit au moins un paramètre PR, une vérification à réaliser. Le module de détermination MD6 est alors configuré pour déterminer si ladite commande de script CMD entraîne une dégradation de la carte C2 en réalisant ladite vérification précédemment déterminée. Comme expliqué par la suite, ladite vérification à réaliser peut varier selon le cas. Cette vérification permet de réaliser un contrôle de sécurité supplémentaire lorsque la modification d'un paramètre de fonctionnement sensible est requise par la commande de scripte CMD reçue. Dans un exemple particulier, cette vérification est une fonction de vérification F prédéfinie exécutable par la carte C2.

Dans l'exemple illustré en **figure 4****,** une fonction de vérification F1, F2, F3 et F4 est enregistrée dans les règles prédéfinies RL en association avec respectivement le tag TG1, TG2, TG3 et TG4. Ces fonctions de vérification F1-F4 seront décrites plus en détail ci-après dans un exemple de réalisation particulier illustré en **figures 6****,** **7** et **8****.** Ces fonctions F définissent ici si le paramètre de fonctionnement PR correspondant est sensible ou non.

Par ailleurs, toujours en référence à la **figure 3****,** le module de sécurisation MD8 est configuré, si une dite dégradation de la sécurité de la carte C2 est détectée comme décrit ci-avant, pour déclencher au moins une opération de sécurisation prédéfinie du dispositif électronique en réponse à la commande de script CMD reçue. Chaque opération de sécurisation est destinée à sécuriser la carte à puce C2 en réponse à la commande de script CMD. Des exemples de telles opérations sont décrits ci-après en référence aux **figures 6****,** **7** et **8****.**

La **figure 5** représente schématiquement le fichier d'historisation LOG selon un mode de réalisation particulier. Ce fichier d'historisation, stocké ici dans la mémoire non-volatile 10, est apte à enregistrer, pour chaque paramètre de fonctionnement PR1-PR4, l'état (ou valeur) initiale V1 dudit paramètre PR à réception d'une commande de script CMD reçue par le module de réception MD2 et le nouvel état V2, spécifier dans la commande de script CMD reçue, à affecter audit paramètre PR. L'exemple particulier de fichier d'historisation LOG illustré en **figure 5** sera décrit plus en détail ultérieurement.

Les étapes réalisées par la carte à puce C2 lors d'un procédé de sécurisation selon un mode de réalisation particulier sont à présent décrites en référence à la **figure 6****.** Pour ce faire, la carte à puce C2 exécute le programme d'ordinateur PG1.

Au cours d'une étape A2 de réception, la carte à puce C2 reçoit une commande de script CMD requérant une modification d'au moins un paramètre PR de fonctionnement de la carte à puce C2. Dans cet exemple, ladite commande CMD inclut le nouvel état (ou valeur) V2 à affecter audit au moins un paramètre de fonctionnement PR, bien que d'autres exemples de réalisation sont possibles selon lesquels le nouvel état (ou valeur) V2 n'est pas inclus dans la commande de script CMD.

La commande de script CMD est par exemple reçue lors d'une transaction EMV en cours mise en œuvre par la carte à puce C2 en coopération avec le terminal T2. Cette commande de script CMD peut être reçue à divers moment lors de la transaction EMV, comme déjà décrit en référence à la **figure 1****.**

Selon un exemple particulier, cette commande de script CMD est émise par l'émetteur EM2 de la carte à puce C2 (par exemple depuis un serveur distant). Cette commande CMD comprend un identifiant MAC permettant à la carte à puce C2 de vérifier l'authenticité et l'intégrité de ladite commande CMD.

Cette commande CMD peut être une commande APDU, par exemple une commande « PUT DATA » selon la norme ISO 7816, cette commande commandant l'affectation d'un nouvel état V2 audit au moins un paramètre de fonctionnement PR dans la carte à puce C2. Grâce à l'envoi d'une telle commande CMD, il est ainsi possible de commander à la carte à puce C2 la modification d'un paramètre de fonctionnement PR de sorte à faire passer son état d'un ancien état V1, dit « état initial », à un nouvel état V2 spécifié dans la commande CMD.

La nature du ou des paramètres de fonctionnement PR, dont une modification est requise par la commande de script CMD, peut varier selon le cas. D'une manière générale, un paramètre de fonctionnement PR configure la manière dont la carte à puce C2 traite une transaction avec un terminal extérieur, tel que le lecteur T2 dans cet exemple.

Le paramètre de fonctionnement PR à modifier peut, par exemple, être un compteur enregistré dans la carte à puce C2. Un tel compteur peut par exemple représenter un nombre de transactions hors ligne déjà réalisées par la carte à puce C2, ou encore le montant cumulé de transactions hors ligne déjà réalisées par la carte à puce C2. Le paramètre PR peut par ailleurs porter sur une valeur seuil d'un tel compteur. Le paramètre PR peut également commander une mise à jour de la configuration de la carte à puce C2 causant un changement dans le traitement des transactions par la carte à puce.

Dans un exemple particulier, une fois la commande de script CMD reçue, la carte à puce C2 vérifie en outre, en A2, l'authenticité de la commande CMD. L'authentification est par exemple réalisée par la carte C2 à partir de l'identifiant MAC inclus dans la commande CMD. La carte C2 est configurée pour procéder à l'étape A4 qui suit uniquement si cette authentification en A2 est passée avec succès. Si l'authentification de la commande CMD échoue, le procédé prend fin (la carte C2 décline par exemple la demande de modification du paramètre PR requise par la commande CMD). Autrement dit, la carte à puce C2 poursuit le procédé seulement si cette commande de script CMD est déterminée comme étant « authentique » en A2. Comme expliqué ci-avant, une commande de script peut être authentique dans le sens où elle a bien été émise par l'émetteur EM2 mais potentiellement frauduleuse dans l'intention dans le sens où cette commande a été envoyée sans autorisation préalable de l'émetteur (par exemple par un employé mal intentionné).

Au cours d'une étape A4 de détection, la carte à puce C2 détecte si ledit au moins un paramètre de fonctionnement PR, dont une modification est requise par la commande CMD reçue en A2, est un paramètre prédéfini en tant que paramètre sensible dans la carte à puce C2. Comme déjà indiqué, il est possible d'adapter, selon le cas d'usage, les paramètres de fonctionnement PR considérés par la carte à puce C2 comme étant sensibles ou non.

Pour ce faire, dans l'exemple considéré ici, la carte à puce C2 consulte la liste LT dans laquelle est spécifié au moins un paramètre de fonctionnement sensible de la carte à puce C2.

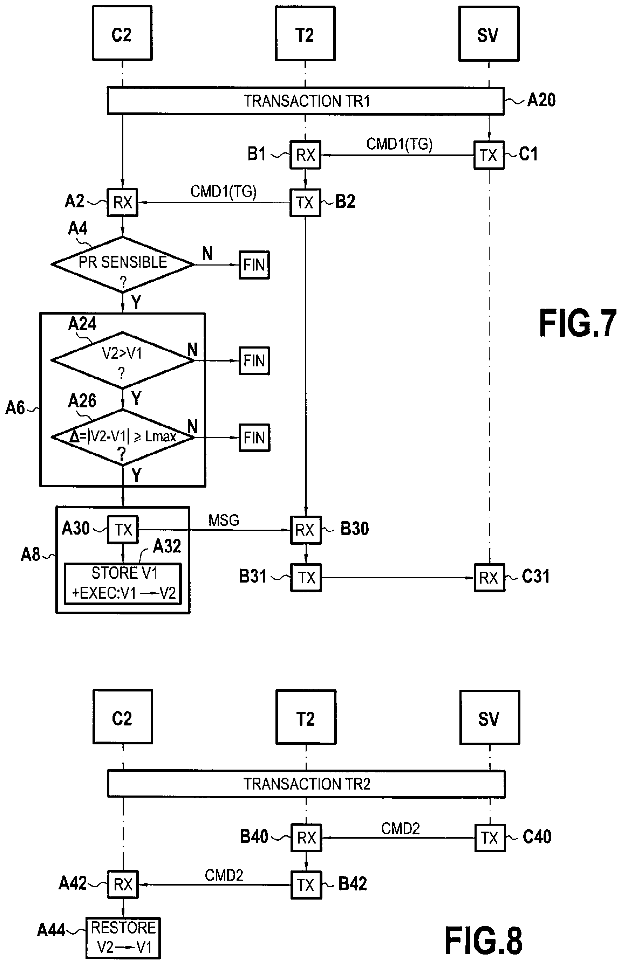

Selon un exemple particulier, une donnée (ou fonction) est enregistrée dans la carte à puce C2 en association avec chaque paramètre PR de la liste LT, ladite donnée indiquant si le paramètre PR correspondant est sensible ou non. L'utilisation d'une telle donnée (ou fonction) sera décrite plus en détail dans un exemple particulier en référence à la **figure 7****.**

Selon un exemple de réalisation particulier, chaque paramètre PR identifié dans la liste LT est un paramètre sensible. Selon encore un autre exemple de réalisation, chaque paramètre PR identifié dans la liste est un paramètre non sensible. Selon ces variantes, la carte à puce C2 peut ainsi déterminer si un paramètre PR donné est sensible ou non à partir de la liste LT, sans qu'il soit nécessaire d'enregistrer une donnée (ou fonction) associée indiquant le caractère sensible ou non du paramètre PR en question.

Au cours d'une étape A6 de détermination, en cas de résultat positif de la détection A4 (c.-à-d. si ledit au moins un paramètre PR à modifier est prédéfini en tant que caractère sensible), la carte à puce C2 détermine si ladite modification requise par la commande de script CMD reçue cause, si elle est appliquée, une dégradation de la sécurité de ladite carte à puce C2. Pour ce faire, la carte à puce C2 compare l'état initial V1 dudit au moins un paramètre PR à réception de ladite commande CMD avec le nouvel état V2 à affecter audit au moins un paramètre PR, ce nouvel état V2 étant (dans cet exemple) inclus dans la commande CMD reçue en A2. Autrement dit, la carte à puce C2 compare l'ancienne valeur V1 dudit au moins un paramètre PR avec sa nouvelle valeur V2 dans l'hypothèse où la modification requise par la commande CMD est appliquée.

A noter qu'une telle dégradation de sécurité peut résulter d'une réelle attaque malveillante à rencontre de la carte C2 ou d'une situation jugée à risque en termes de sécurité par la carte C2.

Selon un exemple de réalisation particulier, si ledit au moins un paramètre PR est détecté en tant que paramètre sensible en A4, la carte à puce C2 détermine (A6), à partir dudit au moins un paramètre PR, une vérification à réaliser. La carte à puce C2 détermine alors en A6 si ladite commande de script CMD entraîne une dégradation de la carte C2 en réalisant la vérification ainsi déterminée. Dans un exemple particulier, cette vérification est une fonction de vérification F prédéfinie comme expliqué plus en détail dans l'exemple de réalisation illustré en **figure 7****.** Il est ainsi possible varier la manière dont la dégradation de sécurité est évaluée en fonction du paramètre de sécurité sensible concerné.

Selon un exemple de réalisation particulier, lors de la détermination A6, la carte à puce C2 vérifie si ledit nouvel état V2 est supérieur ou inférieur à l'état initial V1 dudit au moins un paramètre PR à modifier, puis détermine, à partir de cette vérification, si ladite modification requise par la commande CMD reçue entraîne, si elle est appliquée, une dégradation de la sécurité de la carte à puce C2. Selon la configuration choisie dans la carte à puce C2, la détection d'une augmentation (ou, respectivement, réduction) de la valeur d'un paramètre PR sensible causée par la commande de script CMD peut ainsi être considérée comme constituant une dégradation de la sécurité de ladite carte C2.

Selon un exemple de réalisation particulier, lors de la détermination A6, la carte à puce C2 détermine que ladite modification requise par la commande de script CMD entraîne, si elle est appliquée, une dégradation de la sécurité du dispositif électronique si l'écart de valeur entre le nouvel état V2 et l'état initial V1 dudit au moins un paramètre PR à modifier atteint au moins une valeur seuil prédéfinie. La carte à puce C2 peut par exemple être configurée pour détecter (A6) une dégradation de sécurité si la modification requise par la commande CMD requiert une augmentation d'au moins une valeur prédéfinie de l'un de ses paramètres de fonctionnement PR.

Au cours d'une étape de déclenchement A8, en cas de résultat positif de ladite détermination A6 (c'est-à-dire si une dite dégradation de la sécurité de la carte C2 est détectée en A6), la carte à puce C2 déclenche au moins une opération de sécurisation prédéfinie en réponse à la commande de script CMD reçue. Chaque opération de sécurisation vise à sécuriser ladite carte à puce C2 vis-à-vis de la commande de script CMD reçue en A2. Le nombre et la nature de ces opérations de sécurisation peuvent varier selon le cas d'usage.

Selon un mode de réalisation particulier, ladite au moins une opération de sécurisation A8 comprend au moins l'un quelconque parmi :
- l'enregistrement d'un message à envoyer, ledit message informant de la réception A2 de ladite commande de script CMD, et éventuellement l'envoi dudit message (ce message pouvant inclure un indicateur représentatif du type d'événement, d'attaque ou de problème de sécurité rencontré par la carte à puce C2 suite à la réception A2 de la commande CMD) ;
- l'enregistrement dans le fichier d'historisation LOG de l'état initial V1 dudit au moins un paramètre de fonctionnement PR, et l'application de ladite modification requise par la commande CMD audit au moins un paramètre de fonctionnement PR de sorte à passer son état de l'état initial V1 au nouvel état V2 spécifié dans la commande de script CMD reçue ; et
- l'enregistrement, dans le fichier d'historisation LOG, d'une donnée représentative de la réception A2 de ladite commande de script CMD.

D'autres opérations de sécurisation A8 sont possibles telles que la restauration de la de l'état initial V1 du paramètre de fonctionnement PR postérieurement à l'application de la modification requise par la commande de script CMD, comme décrit par exemple plus en détail dans le mode de réalisation illustré en **figure 8****.**

L'invention permet avantageusement de réaliser une sécurisation supplémentaire de la carte à puce C2 lorsque cette dernière détecte qu'une modification de l'un de ses paramètres de fonctionnement sensibles est requise par une commande de script. Il est ainsi possible d'adapter le traitement, par la carte à puce, des commandes de script visant à modifier un paramètre de fonctionnement, de façon à limiter les risques encourus par ladite carte en termes de sécurité.

L'invention permet notamment de protéger efficacement la carte à puce face à une potentielle attaque de type « *insider attack »* telle que décrite précédemment, dans le cas où une commande de script frauduleuse est reçue par la carte en question. La carte à puce C2 peut adapter sa réponse sécuritaire à une commande de script reçue en réalisant une opération de sécurisation spécifique et ce, même si la vérification de l'authenticité et de l'intégrité de ladite commande de script est passée avec succès par la carte à puce.

Un mode de réalisation particulier du procédé décrit en référence à la **figure 6** est à présent décrit en référence notamment à la **figure 7****.** On suppose que la carte à puce C2 met en œuvre un procédé de sécurisation en exécutant le programme PG1.

On suppose en premier lieu qu'une transaction EMV (notée TR1) est en cours (A20), cette transaction étant mise en œuvre de façon quelconque par la carte à puce C2 en coopération avec le terminal T2, ce dernier faisant l'interface entre la carte C2 et le serveur distant SV de l'émetteur EM2. Il s'agit ici d'une transaction en ligne dans le sens où l'émetteur EM2 intervient dans la mise en œuvre de la transaction TR1.

En C1, le serveur SV envoie une commande de script CMD1 au terminal T2 qui la reçoit en B1. Le terminal T2 transmets (B2) ensuite cette commande CMD1 à la carte à puce C2 qui la reçoit en A2.

On suppose ici que la commande CMD1 requiert une modification d'un unique paramètre de fonctionnement PR de la carte à puce C2, bien que d'autres implémentations soient possibles.

La commande de script CMD1 comprend un identifiant MAC permettant de vérifier que la commande CMD1 est bien authentique.

De plus, dans l'exemple considéré ici, la commande de script CMD1 présente une structure TLV comme déjà mentionnée ci-avant. La commande CMD1 comprend en particulier un tag (noté TG) définissant la zone mémoire de destination où le paramètre de fonctionnement PR en question doit être modifié dans la mémoire 10 de la carte C2.

On suppose dans cet exemple que la commande de script CMD1 est une commande APDU de type « PUT DATA » selon la norme ISO 7816, cette commande commandant l'affectation d'un nouvel état V2 au paramètre de fonctionnement PR dans la carte à puce C2. Comme déjà indiqué, une telle commande CMD permet de demander à la carte à puce C2 la modification d'un paramètre de fonctionnement PR de sorte à faire passer son état d'un état initial V1 à un nouvel état V2 spécifié dans la commande CMD1. Dans cet exemple particulier, le nouvel état (ou valeur) V2 à affecter au paramètre de fonctionnement PR concerné est inclus dans la commande de script PUT DATA CMD1, bien que d'autres exemples de réalisation sont possibles selon lesquels le nouvel état (ou valeur) V2 n'est pas inclus dans la commande de script.

Dans un exemple particulier déjà décrit ci-avant, une fois la commande de script CMD1 reçue, la carte à puce C2 vérifie en outre, en A2, l'authenticité de la commande CMD1. Dans cet exemple, l'authentification est réalisée par la carte C2 à partir de l'identifiant MAC inclus dans la commande CMD1 reçue en A2. La carte C2 est configurée pour procéder à l'étape A4 qui suit uniquement si cette authentification en A2 est passée avec succès. Si l'authentification de la commande CMD1 échoue, le procédé prend fin (la carte C2 décline par exemple la demande de modification du paramètre PR requise par la commande CMD1). Autrement dit, la carte à puce C2 poursuit le procédé seulement si cette commande de script CMD1 est déterminée comme étant « authentique » en A2.

Comme déjà expliqué ci-avant en référence à la **figure 6****,** la carte à puce détecte en A4 si le paramètre de fonctionnement PR à modifier est un paramètre prédéfini en tant que paramètre sensible. Dans cet exemple particulier représenté en **figure 7****,** cette détermination est réalisée à partir de la liste LT dans laquelle sont enregistrés les tags TG1, TG2, TG3 et TG4 correspondant respectivement aux paramètres de fonctionnement PR1, PR2, PR3 et PR4 (figure 4). Lors de la détection A4, la carte à puce C2 détermine si le tag TG inclus dans la commande CMD reçue en A2 est enregistré dans la liste LT comme identifiant un paramètre PR sensible de la carte C2.

Dans l'exemple illustré en **figure 4****,** les fonctions de vérification F1, F2, F3 et F4 (notées collectivement F) sont en outre enregistrées dans les règles prédéfinies RL (notées RL1 à RL4) en association avec respectivement le tag TG1, TG2, TG3 et TG4. Chaque fonction F indique si le paramètre de fonctionnement PR1-PR4 correspondant est sensible ou non.

Dans cet exemple particulier, la fonction de vérification F1 renvoie la valeur « 0 » (F1 = 0) ce qui signifie que le paramètre PR1 associé au tag TG1 est prédéfini en tant que paramètre non sensible dans la carte C2. Toujours dans cet exemple, les fonctions de vérification F2, F3 et F4 sont telles que :
- la fonction de vérification F2(TG2, V21, V22) associée au paramètre de fonctionnement PR2 prend comme entrées le tag TG2, la valeur initiale V21 du paramètre PR2 et la nouvelle valeur V22 à affecter au paramètre PR2 ;
- la fonction de vérification F3(TG3, V31, V32) associée au paramètre de fonctionnement PR3 prend comme entrées le tag TG3, la valeur initiale V31 du paramètre PR3 et la nouvelle valeur V32 à affecter au paramètre PR3 ;
- la fonction de vérification F4(TG4, V41, V42) associée au paramètre de fonctionnement PR4 prend comme entrées le tag TG2, la valeur initiale V41 du paramètre PR4 et la nouvelle valeur V42 à affecter au paramètre PR4.

Selon un exemple particulier, deux au moins parmi les fonctions F2, F3 et F4 sont identiques.

Selon un exemple particulier, l'une au moins parmi les fonctions F ne prend pas de tag TG en entrée.

Selon un exemple particulier, chaque règle RL enregistre, en lieu et place des fonctions F, un indicateur spécifiant si le paramètre de fonctionnement PR associé est sensible ou non.

Dans l'exemple considéré ici, la carte à puce C2 détermine en A4 si le paramètre PR à modifier est sensible ou non en comparant le tag TG inclus dans la commande CMD1 avec les tag TG1-TG4 identifié dans la liste LT et en déterminant la fonction de vérification F enregistrée (le cas échéant) dans une règle RL en association avec le tag TG inclus dans la commande CMD1. La carte à puce C2 détermine (A4) alors, à partir de la fonction F associée au tag TG inclus dans la commande CMD1, si le paramètre de fonctionnement PR correspondant est sensible ou non pour la carte à puce C2. On suppose par exemple que la carte à puce détecte en A4 que le tag TG inclus dans la commande CMD1 est le tag TG2 et détermine, en exécutant la fonction de vérification F2, que le tag TG correspond à un paramètre de fonctionnement sensible de la carte à puce C2.

Comme déjà expliqué ci-avant en référence à la **figure 6****,** la carte à puce détermine (A6 ; **figure 7**) ensuite si ladite modification requise par la commande de script CMD1 entraîne, si elle est appliquée, une dégradation de la sécurité de la carte à puce C2 en comparant l'état initial V1 du paramètre sensible PR concerné à réception de la commande CMD1 avec le nouvel état V2 (inclus dans cet exemple dans la commande CMD1) à affecter au paramètre sensible PR en question. Pour ce faire, la carte à puce C2 exécute ici la fonction de vérification F spécifiée dans la règle RL concernée en association avec le tag TG inclus dans la commande CMD1 reçue.

Dans cet exemple, l'exécution de la fonction de vérification F applicable cause la réalisation successive de l'étape A24 de comparaison et de l'étape A26 de détermination telles que décrites ci-après.

On comprendra que l'exécution ci-dessous de la fonction F ne constitue qu'un exemple non limitatif et que la manière dont l'évaluation de la potentielle dégradation de sécurité peut être adaptée en modifiant la fonction F en conséquence. L'exécution de cette fonction permet de réaliser un contrôle de sécurité supplémentaire lorsque la modification d'un paramètre de fonctionnement sensible est requise par la commande de scripte reçue.

En A24, la carte à puce C2 compare l'état initial V1 du paramètre sensible PR à modifier (c'est-à-dire l'état actuel du paramètre PR au moment de la réception de ladite commande CMD) avec le nouvel état V2, inclus ici dans la commande CMD1 reçue, à affecter audit paramètre sensible PR.

Dans cet exemple, la carte à puce C2 vérifie en A24 si la nouvelle valeur V2 du paramètre sensible PR à modifier est supérieur (ou, respectivement, inférieur) à la valeur initiale V1 dudit paramètre sensible PR à modifier. Autrement dit, la carte à puce C2 détermine en A24 si la modification requise par la commande de script CMD1 cause l'augmentation (ou, respectivement, la diminution) de l'état du paramètre sensible PR en question. Dans l'exemple considéré ici, si la carte à puce détecte en A24 que V2 > V1, le procédé continue en A26. Dans le cas contraire, le procédé prend fin.

En A26, la carte à puce C2 détermine si l'écart de valeur entre le nouvel état V2 et l'état initial V1 du paramètre sensible PR à modifier atteint au moins une valeur seuil prédéfinie Lmax. Le paramètre sensible PR à modifier est par exemple l'un quelconque parmi :
- un compteur du nombre de transactions hors ligne réalisées par la carte à puce C2 ;
- le montant cumulé de transactions hors ligne réalisées par la carte à puce C2 ; et
- une valeur seuil d'un tel compteur.

Si la carte à puce C2 détermine en A26 que l'écart entre V1 et V2 est au moins égal à la valeur seuil limite Lmax, une dégradation de la sécurité de la carte à puce C2 est détectée et le procédé continue en A8. Dans le cas contraire, le procédé prend fin.

Comme déjà expliqué ci-avant en référence à la **figure 6****,** la carte à puce C2 déclenche en A8 (**figure 7**) au moins une opération de sécurisation de la carte à puce C2 en réponse à la commande de script CMD1 reçue. Comme déjà indiqué, le nombre et la nature de ces opérations (ou actions) de sécurisation peuvent varier selon le cas d'usage.

La carte à puce C2 peut ainsi mettre en œuvre une réponse sécuritaire adaptée en fonction du problème de sécurité rencontré.

Dans l'exemple représenté en **figure 7****,** la carte à puce C2 réalise les opérations de sécurisation A30 et A32 telles que décrites ci-après.

En A30, la carte à puce C2 envoie un message MSG à destination du serveur SV de l'émetteur EM2. Le terminal T2 reçoit le message MSG en B30 et transmet celui-ci au serveur SV en B31. Le serveur SV reçoit le message MSG en C31.

Ce message MSG comprend une donnée représentative de la dégradation de sécurité détectée en A6. Ce message permet avantageusement à la carte à puce C2 d'informer le serveur SV (et éventuellement aussi le terminal T2, si ce dernier prend en compte cette information) du type de problème de sécurité rencontré par la carte à puce C2 suite à la réception A2 de la commande CMD1.

L'envoi A30 du message MSG par la carte à puce C2 peut être réalisé au cours de la transaction TR1, par exemple avant ou après la réception d'un message GAC2 tel que décrit ci-avant en référence à la **figure 1****.**

Dans un exemple particulier, le message MSG est un message de transaction EMV tel que défini par le protocole EMV, ce message comprenant ladite donnée représentative de la dégradation de sécurité détectée en A6.

Dans un exemple particulier, le message MSG est envoyé en A30 au cours d'une nouvelle transaction EMV subséquente à la transaction TR1.

Par ailleurs, la carte à puce C2 enregistre en A32 l'état (ou la valeur) initial V1 du paramètre sensible PR à modifier, c'est-à-dire l'état que présente ledit paramètre PR à réception par la carte à puce C2 de la commande de scripte CMD1. Dans cet exemple, comme représenté en **figure 5****,** l'état initial V1 est enregistré (A32) dans le fichier d'historisation LOG en association avec le paramètre sensible PR correspondant.

En outre, toujours en A32, la carte à puce C2 applique la modification du paramètre sensible PR requise par la commande de script CMD1. Pour ce faire, la carte à puce C2 exécute dans cet exemple la commande PUT DATA en affectant audit paramètre sensible PR le nouvel état V2 requis par la commande CMD1. La carte à puce C2 peut éventuellement également enregistrer le nouvel état V2 dans le fichier d'historisation LOG en association au paramètre sensible PR et à l'état initial V1 correspondants.

Dans le mode de réalisation décrit ici, la carte à puce C2 exécute donc la commande de script CMD1 reçue bien qu'un risque de sécurité ait été détecté. Par précaution, la carte à puce C2 en informe toutefois l'émetteur EM2 et stocke en mémoire l'état initial V1 du paramètre sensible PR afin que la carte à puce C2 et/ou une entité extérieure (telle que l'émetteur EM2 par exemple) puisse y accéder ultérieurement. L'enregistrement A32 de l'état initial V1 permet le cas échéant à la carte à puce C2 de restaurer l'état initial V1 du paramètre sensible PR correspondant, comme expliqué dans un exemple particulier ci-après.

La **figure 8** représente un mode de réalisation particulier selon lequel, suite à l'étape A32 décrite ci-avant en référence à la **figure 7****,** la carte à puce C2 met en œuvre une transaction EMV (notée TR2) subséquent à la transaction TR1. Le terminal T2 fait ici aussi l'interface entre la carte à puce C2 et le serveur distant SV de l'émetteur EM2.

En cours de cette nouvelle transaction TR2, la carte à puce C2 restaure l'état initial V1 du paramètre sensible PR modifié en A32, en réponse à une commande de restauration CMD2 envoyée par le serveur SV.

Plus précisément, suite à l'initiation de la transaction TR2, le serveur SV envoie C40 la commande de restauration CMD2 au terminal T2 qui la reçoit en B40. Le terminal T2 transmet (B42) ensuite cette commande CMD2 à la carte à puce C2 qui la reçoit en A42.

En A44, la carte à puce C2 restaure l'état du paramètre sensible PR modifié en A32 en lui affectant l'état initial V1 enregistré dans le fichier d'historisation LOG (dans cet exemple, V1 est différent de V2).

Dans un exemple particulier, la commande de restauration CMD2 comprend un identifiant du paramètre sensible PR à restaurer de façon à ce que la carte à puce C2 détermine le paramètre sensible PR à restaurer.

Alternativement, la commande CMD2 ne comprend pas un tel identifiant et la carte à puce C2 est configurée pour restaurer l'état d'un ou d'une pluralité de paramètres selon une règle prédéfinie. En réponse à la commande CMD2, la carte à puce C2 restaure par exemple l'état d'au moins un paramètre sensible PR prédéfini. Cette restauration est, par exemple, réalisée à partir du contenu du fichier d'historisation LOG.

On notera que la restauration de l'état initial du paramètre sensible PR modifié en A32 ne fait pas nécessairement intervenir un fichier d'historisation tel qu'illustré par exemple en **figure 5****.** Selon un exemple particulier, en réponse à une commande de restauration CMD2, la carte à puce C2 est configurée pour affecter un état (ou valeur) prédéfini par défaut, cet état pouvant être différent de l'état initial V2 du paramètre sensible PR en question. Dans cet exemple, l'état (ou valeur) prédéfini par défaut est différent du nouvel état V2.

Selon un exemple particulier, en réponse à une commande de restauration CMD2, la carte à puce C2 restaure l'état de tous les paramètres sensibles PR définis en tant que tels dans la liste LT, de sorte que soit affecter à chacun de ces paramètres PR l'état initial V1 à réception A2 de la commande CMD1 ou un état prédéfini par défaut comme expliqué ci-avant.

Ce mode de réalisation particulier permet avantageusement à une entité externe, telle que l'émetteur EM2 par exemple, de déclencher la restauration à distance d'un paramètre sensible PR dont une modification avait précédemment causé une dégradation de la sécurité de la carte à puce C2. L'émetteur EM2 peut ainsi monitorer les messages MSG envoyer par chacune de ses cartes à puce et déclencher ultérieurement la restauration d'un paramètre sensible s'il le juge nécessaire.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de sécurisation mis en œuvre par un dispositif électronique (C2), ledit procédé comprenant :
- réception (A2) d'une première commande (CMD ; CMD1) requérant une modification d'au moins un paramètre (PR) de fonctionnement du dispositif électronique ;
- détection (A4) de si ledit au moins un paramètre de fonctionnement est un paramètre prédéfini en tant que paramètre sensible dans le dispositif électronique ;
- dans l'affirmative, détermination (A6) de si ladite modification requise par la première commande entraîne, si elle est appliquée, une dégradation de la sécurité du dispositif électronique en comparant l'état initial (V1) dudit au moins un paramètre (PR) à réception de ladite première commande avec un nouvel état (V2) à affecter audit au moins un paramètre de fonctionnement en réponse à la première commande ; et
- en cas de dégradation de la sécurité dudit dispositif électronique, déclenchement (A8) d'au moins une opération de sécurisation du dispositif électronique en réponse à ladite première commande.

2. Procédé selon la revendication 1, dans lequel le dispositif électronique détecte que ledit paramètre de fonctionnement (PR) est un paramètre prédéfini en tant que paramètre sensible si la première commande comprend l'un parmi une liste d'au moins un identifiant (TG2-TG4) prédéfini.

3. Procédé selon la revendication 1 ou 2, comprenant, si ledit au moins un paramètre (PR) est détecté comme étant un paramètre prédéfini en tant que paramètre sensible, la détermination (A22), à partir dudit au moins un paramètre de fonctionnement (PR), d'une vérification (F) à réaliser,
le dispositif électronique réalisant ladite vérification lors de ladite détermination (A6) pour déterminer si ladite modification requise entraîne, si elle est appliquée, une dégradation de la sécurité du dispositif.

4. Procédé selon l'une quelconque des revendications 1 à 3, dans lequel, le dispositif électronique vérifie (A24) si ledit nouvel état (V2) est supérieur ou inférieur à l'état initial (V1) dudit au moins un paramètre (PR),
et détermine (A6), à partir de ladite vérification, si ladite modification requise entraîne, si elle est appliquée, une dégradation de la sécurité du dispositif électronique.

5. Procédé selon la revendication 4, dans lequel le dispositif électronique détermine (A26) que ladite modification requise par la première commande entraîne, si elle est appliquée, une dégradation de la sécurité du dispositif électronique, si l'écart de valeur entre le nouvel état (V2) et l'état initial (V1) dudit au moins un paramètre (PR) atteint une valeur seuil prédéfinie (Lmax).

6. Procédé selon l'une quelconque des revendications 1 à 5, dans lequel ladite au moins une opération de sécurisation comprend au moins l'un quelconque parmi :
- enregistrement d'un message (MSG1) à envoyer, ledit message informant de la réception de ladite première commande (CMD1) ;
- envoi (A30) dudit message (MSG1) ;
- enregistrement (A32) de l'état initial (V1) dudit au moins un paramètre de fonctionnement (PR) ;
- application (A32) de ladite modification audit au moins un paramètre de fonctionnement de sorte à passer son état de l'état initial (V1) au nouvel état (V2) ; et
- enregistrement, dans un fichier d'historisation, d'une donnée représentative de la réception de ladite première commande (CMD1).

7. Procédé selon la revendication 6, dans lequel, suite audit enregistrement (A32) de l'état initial (V1) et à l'application (A32) de la modification causant le passage dudit au moins un paramètre de fonctionnement (PR) de l'état initial (V1) au nouvel état (V2), le dispositif électronique (C2) restaure l'état initial (V1) ou un état prédéfini dudit au moins un paramètre de fonctionnement en réponse à une commande de restauration (CMD2).

8. Procédé selon la revendication 7, dans lequel le dispositif électronique reçoit ladite première commande (CMD1) lors d'une première transaction (TR1) mise en œuvre par le dispositif électronique, et dans lequel
le dispositif électronique reçoit la commande de restauration (CMD2) lors d'une seconde transaction (TR2) mise en œuvre par le dispositif électronique, ladite seconde transaction étant subséquente à la première transaction.

9. Procédé selon l'une quelconque des revendications 1 à 8, dans lequel la première commande (CMD1) comprend un cryptogramme de type MAC.

10. Procédé selon l'une quelconque des revendications 1 à 9, dans lequel la première commande (CMD1) est une commande PUT DATA selon la norme ISO 7816, ladite première commande commandant l'affectation du nouvel état (V2) audit au moins un paramètre de fonctionnement (PR).

11. Procédé selon l'une quelconque des revendications 1 à 10, dans lequel le dispositif électronique (C2) est une carte à puce apte à mettre en œuvre une transaction (TR1, TR2) en coopération avec un terminal de lecture (T2).

12. Procédé selon la revendication 11, dans lequel le dispositif électronique est une carte EMV,
l'une au moins parmi les première commande et deuxième commande (CMD1, CMD2) étant une commande de script reçue (A2), lors d'une transaction EMV (TR1), après l'envoi, par ladite carte EMV, d'un message ARQC conforme à la norme EMV.

13. Procédé selon l'une quelconque des revendications 1 à 12, dans lequel ladite première commande inclut le nouvel état (V2) à affecter audit au moins un paramètre de fonctionnement.

14. Programme d'ordinateur (PG1) comportant des instructions pour l'exécution des étapes d'un procédé de sécurisation selon l'une quelconque des revendications 1 à 13 lorsque ledit programme est exécuté par un ordinateur.

15. Dispositif électronique (C2), comprenant :
- un module de réception (MD2) d'une première commande (CMD ; CMD1) requérant une modification d'au moins un paramètre de fonctionnement (PR) du dispositif électronique ;
- un module de détection (MD4) pour détecter si ledit au moins un paramètre de fonctionnement est un paramètre prédéfini en tant que paramètre sensible dans le dispositif électronique ;
- un module de détermination (MD6) configuré, en cas de résultat positif de ladite détection par le module de détection (MD4), pour déterminer si ladite modification requise par la première commande entraîne, si elle est appliquée, une dégradation de la sécurité du dispositif électronique en comparant l'état initial (V1) dudit au moins un paramètre (PR) à réception de ladite première commande avec un nouvel état (V2) à affecter audit au moins un paramètre de fonctionnement en réponse à la première commande ; et
- un module de sécurisation (MD8) configuré, en cas de résultat positif de ladite détermination par le module de détermination (MD6), pour déclencher au moins une opération de sécurisation prédéfinie du dispositif électronique en réponse à ladite première commande.

## Patentansprüche

1. Sicherungsverfahren, das von einem elektronischen Gerät (C2) umgesetzt wird, wobei das Verfahren aufweist:
- Empfangen (A2) eines ersten Befehls (CMD; CMD1), der eine Änderung mindestens eines Betriebsparameters (PR) des elektronischen Geräts anfordert,
- Ermitteln (A4), ob der mindestens eine Betriebsparameter ein Parameter ist, der als sensitiver Parameter in dem elektronischen Gerät vordefiniert ist,
- wenn ja, Bestimmen (A6), ob die durch den ersten Befehl angeforderte Änderung, wenn sie angewendet wird, eine Beeinträchtigung der Sicherheit des elektronischen Geräts mit sich bringt, indem der Ausgangszustand (V1) des mindestens einen Parameters (PR) beim Empfang des ersten Befehls mit einem neuen Zustand (V2) verglichen wird, der dem mindestens einen Betriebsparameter als Antwort auf den ersten Befehl zuzuweisen ist, und
- im Fall von Beeinträchtigung der Sicherheit des elektronischen Geräts, Auslösen (A8) von mindesten einem Vorgang zur Sicherung des elektronischen Geräts als Antwort auf den ersten Befehl.

2. Verfahren nach Anspruch 1, wobei das elektronische Gerät ermittelt, dass der Betriebsparameter (PR) ein Parameter ist, der als sensitiver Parameter vordefiniert ist, wenn der erste Befehl eine aus einer Liste von mindestens einer vordefinierten Kennung (TG2-TG4) aufweist.

3. Verfahren nach Anspruch 1 oder 2, umfassend, wenn der mindestens eine Parameter (PR) als ein Parameter erkannt wird, der als sensitiver Parameter vordefiniert ist, das Bestimmen (A22) ausgehend von dem mindestens einen Betriebsparameter (PR) einer durchzuführenden Überprüfung (F),
wobei das elektronische Gerät diese Überprüfung beim Bestimmen (A6), um zu bestimmen, ob die durch den ersten Befehl angeforderte Änderung, wenn sie angewendet wird, eine Beeinträchtigung der Sicherheit des elektronischen Geräts mit sich bringt, durchführt.

4. Verfahren nach einem der Ansprüche 1 bis 3, wobei das elektronische Gerät überprüft (A24), ob der neue Zustand (V2) höher oder niedriger als der Ausgangszustand (V1) des mindestens einen Parameters (PR) ist und ausgehend von der Überprüfung bestimmt (A6), ob die angeforderte Änderung, wenn sie angewendet wird, eine Beeinträchtigung der Sicherheit des elektronischen Geräts mit sich bringt.

5. Verfahren nach Anspruch 4, wobei das elektronische Gerät bestimmt (A26), dass die von dem ersten Befehl angeforderte Änderung, wenn sie angewendet wird, eine Beeinträchtigung der Sicherheit des elektronischen Geräts mit sich bringt, wenn die Abweichung des Wertes zwischen dem neuen Zustand (V2) und dem Ausgangszustand (V1) des mindestens einen Parameters (PR) einen vorbestimmten Schwellenwert (Lmax) erreicht.

6. Verfahren nach einem der Ansprüche 1 bis 5, wobei der mindestens eine Vorgang zur Sicherung mindestens eines aufweist von:
- dem Speichern einer zu sendenden Nachricht (MSG1), wobei die Nachricht über den Empfang des ersten Befehls (CMD1) informiert,
- dem Senden (A30) der Nachricht (MSG1),
- dem Speichern (A32) des Ausgangszustands (V1) des mindestens einen Betriebsparameters (PR),
- dem Anwenden (A32) der Änderung auf mindestens einen Betriebsparameter, derart, um von seinem Ausgangszustand (V1) in den neuen Zustand (V2) überzugehen, und
- dem Speichern eines Datums, das für den Empfang des ersten Befehls (CMD1) repräsentativ ist, in einer Historiendatei.

7. Verfahren nach Anspruch 6, wobei das elektronische Gerät (C2) nach dem Speichern (A32) des Ausgangszustands (V1) und dem Anwenden (A32) der Änderung, die den Übergang des mindestens einen Betriebsparameters (PR) von dem Ausgangszustand (V1) in den neuen Zustand (V2) bewirkt, den Ausgangszustand (V1) oder einen vorbestimmten Zustand des mindestens einen Betriebsparameters als Antwort auf einen Befehl zur Wiederherstellung (CMD2) wiederherstellt.

8. Verfahren nach Anspruch 7, wobei das elektronische Gerät den ersten Befehl (CMD1) bei einer ersten Transaktion (TR1) erhält, die durch das elektronische Gerät umgesetzt wird, und wobei
das elektronische Gerät den Befehl zur Wiederherstellung (CMD2) bei einer zweiten Transaktion (TR2) erhält, die durch das elektronische Gerät umgesetzt wird, wobei die zweite Transaktion auf die erste Transaktion folgt.

9. Verfahren nach einem der Ansprüche 1 bis 8, wobei der erste Befehl (CMD1) ein Kryptogramm vom Typ des MAC aufweist.

10. Verfahren nach einem der Ansprüche 1 bis 9, wobei der erste Befehl (CMD1) ein PUT DATA-Befehl gemäß der Norm ISO 7816 ist, wobei der erste Befehl die Zuordnung des neuen Zustands (V2) zu dem mindestens einen Betriebsparameter (PR) steuert.

11. Verfahren nach einem der Ansprüche 1 bis 10, wobei das elektronische Gerät (C2) eine Chipkarte ist, die geeignet ist, eine Transaktion (TR1, TR2) im Zusammenwirken mit einem Leseendgerät (T2) umzusetzen.

12. Verfahren nach Anspruch 11, wobei das elektronische Gerät eine EMV-Karte ist,
wobei mindestens einer unter dem ersten Befehl und dem zweiten Befehl (CMD1, CMD2) ein Skriptbefehl ist, der während einer EMV-Transaktion (TR1) nach dem Senden durch die EMV-Karte von einer ARQC-Nachricht, die mit der EMV-Norm konform ist, empfangen wird (A2).

13. Verfahren nach einem der Ansprüche 1 bis 12, wobei der erste Befehl den neuen Zustand (V2) enthält, der dem mindestens einen Betriebsparameter zuzuordnen ist.

14. Computerprogramm (PG1), das Anweisungen für das Ausführen der Schritte eines Sicherungsverfahrens nach einem der Ansprüche 1 bis 13 aufweist, wenn das Programm von einem Computer ausgeführt wird.

15. Elektronisches Gerät (C2), umfassend:
- ein Modul zum Empfangen (MD2) eines ersten Befehls (CMD; CMD1), der eine Änderung mindestens eines Betriebsparameters (PR) des elektronischen Geräts anfordert,
- ein Modul zum Ermitteln (MD4), um zu ermitteln, ob der mindestens eine Betriebsparameter ein Parameter ist, der als sensitiver Parameter in dem elektronischen Gerät vordefiniert ist,
- ein Modul zum Bestimmen (MD6), das konfiguriert ist, um bei einem positiven Ergebnis des Ermittelns durch das Modul zum Ermitteln (MD4), zu bestimmen, ob die durch den ersten Befehl angeforderte Änderung, wenn sie angewendet wird, eine Beeinträchtigung der Sicherheit des elektronischen Geräts mit sich bringt, indem der Ausgangszustand (V1) des mindestens einen Parameters (PR) beim Empfang des ersten Befehls mit einem neuen Zustand (V2) verglichen wird, der dem mindestens einen Betriebsparameter als Antwort auf den ersten Befehl zuzuweisen ist, und
- ein Modul zur Sicherung (MD8), das konfiguriert ist, um bei einem positiven Ergebnis des Bestimmens durch das Modul zum Bestimmen (MD6) mindestens einem Vorgang zur Sicherung des elektronischen Geräts als Antwort auf den ersten Befehl auszulösen.

## Claims

1. A securing method implemented by an electronic device (C2), said method comprising:
- receiving (A2) a first command (CMD; CMD1) requesting a modification of at least one operating parameter (PR) of the electronic device;
- detecting (A4) whether said at least one operating parameter is a predefined parameter as sensitive parameter in the electronic device;
- in the affirmative, determining (A6) whether said modification requested by the first command causes, if it is applied, a degradation of the security of the electronic device by comparing the initial state (V1) of said at least one parameter (PR) upon reception of said first command with the new state (V2) to be assigned to said at least one operating parameter in response to the first command; and
- in case of degradation of the security of said electronic device, triggering (A8) at least one securing operation of the electronic device in response to said first command.

2. The method according to claim 1, wherein the electronic device detects that said operating parameter (PR) is a parameter predefined as sensitive parameter if the first command comprises one among a list of at least one predefined identifier (TG2-TG4).

3. The method according to claim 1 or 2, comprising, if said at least one parameter (PR) is detected as being a parameter predefined as sensitive parameter, determining (A22), from said at least one operating parameter (PR), a verification (F) to be done,
the electronic device performing said verification during said determination (A6) in order to determine whether said requested modification causes, if it is applied, the degradation of the security of the device.

4. The method according to any one of claims 1 to 3, wherein the electronic device verifies (A24) whether said new state (V2) is greater than or less than the initial state (V1) of said at least one parameter (PR),
and determines (A6), from said verification, whether said requested modification causes, if it is applied, a degradation of the security of the electronic device.

5. The method according to claim 4, wherein the electronic device determines (A26) that said modification requested by the first command causes, if it is applied, a degradation of the security of the electronic device, if the value gap between the new state (V2) and the initial state (V1) of said at least one parameter (PR) reaches a predefined threshold value (Lmax).

6. The method according to any one of claims 1 to 5, wherein said at least one securing operation comprises at least any one from:
- recording a message (MSG1) to be sent, said message indicating the reception of said first command (CMD1);
- sending (A30) said message (MSG1);
- recording (A32) the initial state (V1) of said at least one operating parameter (PR);
- applying (A32) said modification to said at least one operating parameter so as to go from its state of the initial state (V1) to the new state (V2); and
- recording, in a historization file, a datum representative of the reception of said first command (CMD1).

7. The method according to claim 6, wherein, after said recording (A32) of the initial state (V1) and the application (A32) of the modification causing the passage of said at least one operating parameter (PR) from the initial state (V1) to the new state (V2), the electronic device (C2) restores the initial state (V1) or a predefined state of said at least one operating parameter in response to a restoration command (CMD2).

8. The method according to claim 7, wherein the electronic device receives said first command (CMD1) during a first transaction (TR1) implemented by the electronic device, and wherein
the electronic device receives the restoration command (CMD2) during a second transaction (TR2) implemented by the electronic device, said second transaction being subsequent to the first transaction.

9. The method according to any one of claims 1 to 8, wherein the first command (CMD1) comprises cryptogram of the MAC type.

10. The method according to any one of claims 1 to 9, wherein the first command (CMD1) is a PUT DATA command according to standard ISO 7816, said first command commanding the allocation of the new state (V2) to said at least one operating parameter (PR).

11. The method according to any one of claims 1 to 10, wherein the electronic device (C2) is a chip card able to implement a transaction (TR1, TR2) in cooperation with a reading terminal (T2).

12. The method according to claim 11, wherein the electronic device is an EMV card,
the at least one among the first command and second command (CMD1, CMD2) being a received script command (A2), during an EMV transaction (TR1), after the sending, by said EMV card, of an ARQC message according to the EMV standard.

13. The method according to any one of claims 1 to 12, wherein said first command includes the new state (V2) to be allocated to said at least one operating parameter.

14. A computer program (PG1) including instructions for executing steps of a securing method according to any one of claims 1 to 13 when said program is executed by a computer.

15. An electronic device (C2), comprising:
- a receiving module (MD2) for receiving a first command (CMD; CMD1) requesting a modification of at least one operating parameter (PR) of the electronic device;
- a detection module (MD4) for detecting whether said at least one operating parameter is a parameter predefined as sensitive parameter in the electronic device;
- a determining module (MD6) configured, in case of positive result of said detection by the detection module (MD4), for determining whether said modification requested by the first command causes, if it is applied, a degradation of the security of the electronic device by comparing the initial state (V1) of said at least one parameter (PR) on reception of said first command with a new state (V2) to be assigned to said at least one operating parameter in response to the first command; and
- a securing module (MD8) configured, in case of positive result of said determination by the determining module (MD6), to trigger at least one predefined securing operation of the electronic device in response to said first command.
